# FASCICULE DE BREVET EUROPEEN

(11) **EP 0 874 145 B1**
(45) Date de publication et mention de la délivrance du brevet: **18.12.2002**
(21) Numéro de dépôt: 98201185.0
(22) Date de dépôt: 14.04.1998
(51) Int. Cl.: F02D 9/10, F16K 1/22

(54) **Dispositif d'obturation**
Drosselvorrichtung
Throttling device

(30) Priorité: 25.04.1997 BE 9700384
(43) Date de publication de la demande: 28.10.1998
(73) Titulaire: FILTERWERK MANN & HUMMEL GMBH, 71638 Ludwigsburg (DE)
(72) Inventeur: Magdelyns, Michel, 1050 Bruxelles (BE); Perez, Rufino, 1600 St. Pieters Leeuw (BE)
(74) Mandataire: Voth, Gerhard, Dipl.-Ing.

(56) Documents cités:
- EP-A- 0 050 707
- DE-A- 2 950 866
- DE-A- 19 516 926
- FR-A- 2 210 720

## Description

La présente invention concerne un dispositif d'obturation à ouverture progressive, pouvant notamment être utilisé dans un "boîtier papillon" permettant de régler le débit d'alimentation en air d'un moteur à combustion interne et ainsi de déterminer la puissance qu'il délivre, grâce au déplacement d'une pièce - typiquement en forme de disque - pouvant pivoter autour d'un de ses diamètres, perpendiculaire à l'axe du conduit dans lequel elle est disposée.

Un tel dispositif est connu selon EP-A-050707.

Dans de nombreux cas, et en particulier dans les "boîtiers papillons" mentionnés ci-dessus, il est nécessaire de pouvoir régler le débit d'un fluide d'une manière aussi progressive que possible, en particulier aux faibles débits. Cependant, dans le cas de fluides peu visqueux tels que l'air, la plupart des dispositifs d'obturation fonctionnent quasiment en "tout-ou-rien", ou sont en tout cas incapables d'assurer un réglage précis et progressif de faibles débits.

Outre une bonne progressivité du débit, il est utile que de tels dispositifs d'obturation présentent une certaine adaptabilité, afin qu'un même dispositif puisse présenter différentes caractéristiques de débit, et puisse ainsi être utilisé dans différents contextes (par exemple en vue d'être associé à des moteurs de puissances différentes), moyennant des adaptations aussi réduites que possibles. Autrement dit, il est souhaitable que la majorité des pièces du dispositif soient communes à ses différentes applications, et que les éventuelles pièces spécifiques à chacune de ces applications soient aussi peu nombreuses et peu coûteuses que possible.

La plupart des boîtiers papillons connus sont réalisés en métal, par exemple en aluminium, afin que les jeux - et par conséquent la caractéristique de débit - ne soient pas excessivement affectés par les importantes variations de températures auxquelles peut être soumis un tel dispositif, notamment dans un véhicule, et soient en outre raisonnablement identiques d'un exemplaire à l'autre. L'utilisation d'un métal est une solution coûteuse ; il serait préférable de disposer d'une solution permettant l'utilisation de matières plastiques, offrant en outre une réduction du poids du dispositif.

Des solutions ont déjà été proposées en vue de remédier à ces inconvénients. Ainsi, dans le document GB 2254931, on propose d'utiliser un élément obturateur en matière plastique, présentant une forme complexe (figure 8), comportant en particulier un rebord profilé (145) réduisant le débit lorsque l'angle d'ouverture est faible. Il va sans dire que la fabrication d'un tel dispositif est complexe, et demande une très grande précision. Ceci impose en général l'utilisation de matières plastiques présentant des performances - et un prix - élevés, ou bien une étape d'usinage. En outre, ce dispositif ne peut pas être aisément adapté à différents types de moteurs, à moins d'usiner ou de remplacer l'élément obturateur. Un autre inconvénient du dispositif décrit dans ce document est que le rebord profilé, s'étendant sur toute la périphérie de l'élément obturateur, et donc sur toute la largeur de la canalisation, crée une perte de charge significative lorsque l'obturateur est totalement ouvert. Ce dispositif se caractérise en outre par un système de bypass de ralenti extrêmement complexe et encombrant.

Une autre solution visant à assurer la progressivité des faibles débits consiste à donner, à la surface intérieure du tronçon de canalisation dans lequel est installé l'élément obturateur, une forme approximativement sphérique, afin que lorsque l'élément obturateur s'ouvre en pivotant, la distance séparant son bord de la paroi (et donc le débit du fluide) augmente initialement de façon prédéterminée, très progressivement. Cette solution rend cependant le tronçon de canalisation difficile à fabriquer, en raison notamment des contre-dépouilles qu'il présente. En outre, la précision avec laquelle la surface intérieure de la canalisation doit être profilée rend l'utilisation de matières plastiques peu adéquate.

La présente invention vise à remédier à ces inconvénients, et à fournir un dispositif d'obturation qui soit simple à fabriquer, qui n'exige pas une grande précision dimensionnelle, et qui assure une bonne progressivité du réglage aux faibles débits. Lorsque ce dispositif est associé à un moteur à combustion interne, des objectifs plus spécifiques concernent un réglage aisé du ralenti (intégration possible d'une fonction de bypass) ainsi qu'une adaptation aisée du dispositif à différents contextes d'utilisation. Ceci est notamment utile pour adapter un même moteur en vue de son installation dans des véhicules munis ou non d'une installation de climatisation, et/ou munis ou non d'une boîte de transmission automatique. Elle vise en outre à fournir un dispositif d'obturation pouvant être fabriqué en matière plastique sans que ce choix ne nuise à son bon fonctionnement. Le dispositif de l'invention doit aussi présenter un débit de fuite aussi faible que possible en position fermée, et une perte de charge aussi faible que possible en position ouverte.

A cette fin, la présente invention concerne un dispositif d'obturation destiné au réglage progressif du débit d'un fluide circulant dans une canalisation, selon la revendication 1.

Ce dispositif répond aux objectifs décrits ci-dessus.

La canalisation peut être de forme quelconque. Il est avantageux qu'elle présente une section circulaire, ce qui réduit le périmètre de l'élément d'obturation principal et ainsi les risques de fuites en position fermée.

L'élément d'obturation principal (ci-après dénommé "EOP" dans un souci de simplicité) est souvent constitué d'une plaque approximativement plane, d'une forme correspondant à celle de la section transversale de la canalisation de façon à en permettre l'obturation complète, et comportant éventuellement des nervures en vue d'en améliorer la rigidité. Lorsque la canalisation est de section circulaire, ledit élément a la forme d'un disque. Cet élément peut pivoter autour d'un axe, traversant la canalisation perpendiculairement à l'axe de cette dernière. L'EOP comporte des moyens de guidage constitués par un logement cylindrique creux, situé substantiellement dans son plan, et dans lequel passe l'axe. L'EOP peut également être muni, dans le même but, de pattes de fixation, constituées par exemple d'éléments encliquetables en forme de U. On veillera toutefois à ce que le jeu entre l'axe et l'EOP soit suffisant pour permettre sa rotation sans frottement excessif. Un ou plusieurs paliers peuvent avantageusement être utilisés pour réduire les frottements entre l'axe et l'EOP.

Afin d'améliorer l'étanchéité du dispositif en position fermée, la canalisation est avantageusement munie d'épaulements intérieurs, présentant approximativement la forme de demi-cercles, contre lesquels peut venir buter le bord de l'EOP ; cette variante réduit l'influence de la précision des dimensions (et de la dilatation) de l'EOP sur le débit de fuite en position fermée. Afin de réduire ou de supprimer le risque de fuites, ces épaulements peuvent avantageusement être munis de joints, sur leur face entrant en contact avec l'EOP en position fermée. Alternativement, des joints peuvent être prévus sur l'EOP lui-même, à la périphérie de ses faces latérales. Le fait que ces joints soient disposés de cette façon, et non sur la tranche de l'EOP ou dans une gorge pratiquée dans la paroi de la canalisation, évite que ces joints ne soient sollicités latéralement, ce qui peut conduire à des problèmes d'usure et de coincement, voir d'arrachement des joints.

Avantageusement, l'élément d'obturation principal est muni de moyens de rappel, faisant en sorte qu'en l'absence de sollicitation, cet élément se ferme et obture la canalisation. Ces moyens de rappel sont par exemple constitués d'un ou plusieurs ressorts, et peuvent être disposés aussi bien dans la canalisation qu'en-dehors. Dans ce dernier cas, des moyens de transmission sont donc nécessaires entre l'intérieur et l'extérieur de la canalisation, ce qui peut nécessiter l'utilisation de joints d'étanchéité (à moins que des moyens de transmission magnétiques ne soient utilisés). Un premier avantage de la présence de tels moyens de rappel est qu'elle évite un emballement du moteur, en obturant automatiquement la canalisation en cas de disparition accidentelle de sollicitation (commande) externe. Un second avantage est que ces moyens de rappel évitent que la caractéristique de débit - c'est-à-dire la relation liant le débit du fluide dans la canalisation à une sollicitation de commande externe telle qu'un angle d'ouverture - ne souffre d'hystérèse en raison de la présence de clapet(s). En effet, de tels moyens de rappel empêchent que l'EOP soit ouvert alors que son orifice est obturé par le clapet d'obturation.

Alternativement, ces moyens de rappel peuvent consister dans une conception particulière de l'EOP. Ainsi, par exemple, le fait de décentrer l'axe par rapport à l'EOP a pour conséquence que le fluide exerce une force différente sur chacune des deux parties de l'EOP situées de part et d'autre de l'axe, résultant en un couple de rappel provoquant la rotation de l'EOP.

On comprendra que l'invention s'étend également à des variantes équivalentes à celle décrite ci-dessus. Par exemple, l'axe autour duquel l'EOP peut pivoter ne s'étend pas forcément d'un côté à l'autre de l'EOP, mais il peut aussi s'agir de deux courtes tiges, disposées dans le prolongement l'une de l'autre, traversant la paroi de la canalisation en deux points diamétralement opposés et venant se loger dans deux évidements de profondeur limitée pratiqués de part et d'autre dans l'EOP. Alternativement, l'une de ces deux tiges peut éventuellement être constituée d'une protubérance faisant partie intégrante de l'EOP, la canalisation présentant alors un renfoncement apte à recevoir cette protubérance.

L'EOP comporte au moins un orifice de faibles dimensions. La combinaison de ce ou ces orifices avec au moins un clapet d'obturation tel que décrit ci-dessous constitue une caractéristique essentielle de l'invention. En effet, c'est par ce ou ces orifices uniquement que s'écoule le fluide, sous le contrôle d'un ou plusieurs clapets d'obturation, lorsqu'un faible débit est imposé au dispositif d'obturation.

La largeur généralement faible du ou des clapet assure qu'ils provoquent une faible perte de charge minime lorsque l'EOP est ouvert.

Dans un souci de simplicité, on se référera, dans la présente description, à un clapet et un orifice, étant entendu que les indications fournies peuvent s'appliquer à chacun des clapets et/ou à chacun des orifices, dans les cas où plusieurs clapets et/ou plusieurs orifices sont présents.

Le nombre de clapets d'obturation n'est pas forcément égal au nombre d'orifices. Ainsi, un même clapet d'obturation peut éventuellement obturer plusieurs orifices.

Le clapet d'obturation et le clapet d'entraînement ne sont pas forcément distincts. Lorsqu'ils sont distincts, ou plus généralement lorsque plusieurs clapets sont présents, ces clapets sont toutefois solidaires, et se déplacent donc en synchronisme. Pour les rendre solidaires, on peut par exemple les fixer à l'axe, pour autant que l'EOP puisse pivoter indépendamment de l'axe. La variante selon laquelle le dispositif comprend un clapet unique servant à la fois de clapet d'obturation et de clapet d'entraînement est particulièrement avantageuse en raison de sa simplicité.

Le clapet d'obturation a des dimensions légèrement supérieures à celles de l'orifice. La fonction de ce clapet consiste à contrôler du débit du fluide : il s'agit d'assurer l'obturation complète de l'orifice que comporte l'EOP lorsqu'un débit nul est imposé au dispositif d'obturation, et d'assurer une variation progressive de ce débit, exclusivement à travers l'orifice, dans la plage des faibles débits, lorsque l'EOP est fermé.

Afin d'assurer une bonne étanchéité en position fermée, le clapet d'obturation présente une forme adaptée à celle de l'orifice correspondant, ou adaptée plus précisément à la forme de la partie de la surface de l'EOP située en regard du clapet, avec laquelle celui-ci entre en contact en position fermée. De préférence, l'élément d'obturation principal et le clapet d'obturation sont substantiellement plans. Avantageusement, le clapet d'obturation et/ou la périphérie de l'orifice pratiqué dans l'EOP sont en outre munis d'un joint d'étanchéité, par exemple toroïdal.

Le fait que la variation du débit (aux faibles valeurs) dépend en grande partie de la forme précise du clapet d'obturation constitue un avantage, dans la mesure où un même EOP peut ainsi être utilisé dans des dispositifs d'obturation destinés à différents usages (par exemple à des moteurs de puissances différentes), pour autant qu'on dispose de clapets d'obturation spécifiquement adaptés à chacun de ces usages.

Selon une variante avantageuse, afin d'assurer une variation progressive du débit à travers l'orifice pendant que l'EOP est encore en position fermée, au moins un clapet d'obturation, tout en comportant une zone globalement plane (ou du moins de forme adaptée à celle de la partie de la surface de l'EOP où est situé l'orifice), comporte une protubérance globalement perpendiculaire au clapet (à cette zone plane), la protubérance étant dirigée vers l'orifice et apte à s'engager dans celui-ci. La protubérance est de préférence profilée de telle façon que la section d'écoulement du fluide à travers l'orifice varie de manière extrêmement progressive lorsque l'écart angulaire du clapet par rapport à l'EOP est faible. La protubérance peut faire partie intégrante du clapet d'obturation, ou encore constituer une pièce distincte, fixée au clapet proprement dit par des moyens usuels (par exemple par soudage, par encliquetage ou par vissage). Un avantage de l'utilisation d'une protubérance amovible est qu'elle permet très aisément d'équiper un même clapet d'obturation de différentes protubérances, et d'adapter ainsi de manière simple le dispositif d'obturation à des utilisations différentes. La protubérance peut présenter différentes formes. Ainsi, il peut s'agir d'une sorte de cône, éventuellement légèrement déformé selon un arc de cercle en vue d'optimiser son centrage par rapport à l'orifice (protubérance en forme de corne). Lorsque l'EOP comporte deux orifices, chacun obturable par un clapet d'obturation muni d'une protubérance, rien n'impose que les deux protubérances soient identiques. On peut ainsi obtenir une variation différente du débit de fluide par chacun des orifices. En outre, quelle que soit la conception des clapets, les orifices eux-mêmes peuvent éventuellement présenter des dimensions et/ou des formes différentes.

Le clapet d'obturation peut encore être constitué d'une languette trapézoïdale ou triangulaire, destinée à s'introduire de façon progressive dans un orifice en forme de fente de même largeur. Selon une autre variante, le clapet d'obturation est flexible, et entre en contact avec l'EOP sur une partie variable de sa surface : autrement dit, à partir d'une situation de fermeture complète, on passe d'abord par une situation dans laquelle le clapet est partiellement décollé de l'EOP, avant que le clapet ne soit plus du tout en contact avec l'EOP.

Enfin, une autre méthode permettant d'adapter la caractéristique de débit du dispositif à une application spécifique consiste à usiner l'EOP de manière appropriée. Cet usinage peut être très réduit. Ainsi, si l'on souhaite disposer de deux types d'EOP, l'un comportant un orifice de faible diamètre (D1) et l'autre comportant un orifice de diamètre supérieur (D2), on peut fabriquer systématiquement des EOP comportant un orifice de diamètre D1, et en usiner ultérieurement certains afin de porter le diamètre de leur orifice à la valeur D2. Alternativement, cet usinage peut également servir à respecter avec précision une caractéristique de débit prédéterminée dans la plage des faibles débits (dans laquelle l'EOP proprement dit reste fermé), en installant successivement chaque dispositif d'obturation dans une installation de mesure équipée d'une source de fluide et de capteurs de débit, et en usinant si nécessaire légèrement l'orifice en fonction des résultats des mesures. Lorsque l'EOP est constitué de matière plastique, un tel usinage peut s'effectuer aisément, par exemple au moyen d'un laser.

La fonction du clapet d'entraînement est mécanique, et consiste à provoquer l'ouverture de l'EOP une fois que le clapet a atteint un écart prédéterminé. Autrement dit, la position de l'EOP est déterminée par celle du clapet d'entraînement.

Une caractéristique importante du dispositif de l'invention est que, pour qu'il puisse régler précisément et progressivement un faible débit de fluide, le ou les clapets (d'entraînement comme d'obturation) doivent être capable de s'écarter angulairement de l'EOP sans provoquer le déplacement de ce dernier. Par contre, au-delà d'un certain écart angulaire prédéterminé (φ), le clapet d'entraînement doit entraîner ledit élément et provoquer son ouverture. Autrement dit, si l'on désigne respectivement par α et par β l'écart angulaire du clapet d'entraînement d'une part, et de l'EOP d'autre part, par rapport à leur position de fermeture initiale commune, on se trouve successivement dans les situations suivantes, pour passer d'un débit nul à un débit maximal. L'écart angulaire entre le clapet d'entraînement et l'EOP vaut donc α-β ; la valeur maximale de cet écart, prédéterminée, fixée par construction, est désignée par φ. L'angle φ est avantageusement compris entre 5 et 20°. Le clapet d'entraînement et le clapet d'obturation étant solidaires, l'écart angulaire du clapet d'obturation par rapport à l'EOP vaudra également α-β.

| Clapet | EOP | Situation |
|---|---|---|
| α = 0 | β = 0 | fermeture complète (débit de fluide nul) |
| α = φ/2 | β = 0 | le clapet d'obturation est partiellement ouvert ; l'EOP est en position fermée ; un faible débit passe à travers l'orifice pratiqués dans ledit élément |
| α = φ | β = 0 | le clapet d'obturation est à son ouverture maximale ; l'EOP est toujours fermé ; un débit plus important passe à travers l'orifice |
| α = 3 φ / 2 | β = φ / 2 | le clapet d'obturation est à son ouverture maximale ; l'EOP est partiellement ouvert sous l'effet du clapet d'entraînement et le débit du fluide est donc plus élevé |
| | β ≈ 90° | l'EOP est complètement ouvert et le débit est maximal |

Un mode de réalisation avantageux d'un dispositif fonctionnant de la façon susmentionnée est décrit ci-après. Selon ce mode de réalisation, l'élément d'obturation principal comporte un logement cylindrique creux, transversal, destiné à recevoir l'axe, lequel logement comprend, à au moins l'une de ses extrémités, une ouverture en forme de fente, parallèle à l'axe, dans laquelle passe le clapet d'entraînement, ladite ouverture interceptant, dans un plan perpendiculaire à l'axe, un angle permettant audit clapet de pivoter au maximum d'un angle φ par rapport à l'élément d'obturation principal. Le clapet, unique, joue dans ce cas à la fois le rôle d'un clapet d'obturation et celui d'un clapet d'entraînement. Le logement cylindrique creux est disposé approximativement dans le plan de l'EOP et en son milieu, ceci afin que le fluide n'exerce aucun couple de rotation sur l'EOP (on considère par simplicité l'EOP comme plan, même si ce n'est pas rigoureusement le cas au sens mathématique du terme). Ainsi, dans le cas d'un EOP en forme de disque, ce logement est disposé approximativement selon un diamètre de l'EOP. La longueur de l'ouverture en forme de fente (mesurée parallèlement à l'axe) est légèrement supérieure à la largeur du clapet. Dans le sens circonférentiel, c'est-à-dire lorsqu'on considère une coupe perpendiculaire à l'axe, cette ouverture s'étend le plus souvent à partir de l'une des faces de l'EOP, et intercepte un angle correspondant à l'écart angulaire maximal (φ) que l'on autorise entre le clapet et l'EOP. On peut rendre le clapet solidaire de l'axe de rotation, par exemple en munissant celui-ci d'un méplat, ou encore en utilisant une pièce injectée unique jouant à la fois le rôle d'axe et de clapet. De cette façon, en insérant l'axe muni du clapet dans le cylindre creux de l'EOP, et en disposant cet ensemble à l'intérieur de la canalisation, de telle façon qu'une extrémité de l'axe soit accessible et puisse être commandé depuis l'extérieur de celle-ci, il est possible d'obtenir un dispositif d'obturation fonctionnant comme décrit dans le tableau ci-dessus.

Selon une variante avantageuse, le logement cylindrique creux comporte une ouverture en forme de fente à chacune de ses deux extrémités, et un clapet d'entraînement passe à travers chacune des deux ouvertures. On dispose ainsi d'un clapet d'entraînement à proximité de chacune des deux extrémités de l'axe : de cette façon, l'EOP est sollicité de manière symétrique par les clapets d'entraînement, et non en torsion, comme ce serait le cas si un clapet d'entraînement unique était disposé à proximité d'un seul bord de l'EOP. Il est nécessaire qu'au moins l'un de ces deux clapets d'entraînement serve simultanément de clapet d'obturation, afin d'obturer un orifice pratiqué dans l'EOP. Selon une variante particulièrement simple, l'EOP comporte un orifice unique, disposé à proximité d'un de ses bords, auquel est associé un clapet d'obturation servant également de clapet d'entraînement, un clapet d'entraînement distinct étant disposé à proximité de l'autre bord de l'EOP afin d'éviter que cet élément ne soit soumis à un couple de torsion. L'assemblage du dispositif d'obturation est dans ce cas très simple : il suffit ainsi de sélectionner un clapet d'obturation et un clapet d'entraînement adaptés à l'application visée et de les fixer à chaque extrémité de l'axe de rotation, que l'on aura préalablement inséré dans le cylindre creux faisant partie de l'EOP et servant de logement à l'axe, chaque clapet venant prendre place dans la fente ad hoc pratiquée à chaque extrémité dudit cylindre et pouvant y pivoter d'un angle limité (φ).

Eventuellement, chacun des deux clapets d'entraînement sert également de clapet d'obturation, l'EOP étant muni de deux orifices correspondants.

D'autres modes de réalisation ne sont pas exclus. Ainsi, le logement cylindrique creux de l'EOP peut comporter une ouverture en forme de fente unique, s'étendant d'un bord à l'autre de l'EOP. Dans ce cas, le positionnement correct du ou des clapets peut notamment être assuré en prévoyant, à l'une ou aux deux extrémités de l'axe, un méplat de longueur soigneusement choisie.

Alternativement, dans le cas où l'EOP est muni de pattes de fixation (par exemple en forme de U) destinées à retenir l'axe tout en permettant sa rotation indépendante, l'EOP peut, de manière alternative à ce qui a été décrit ci-dessus, être muni d'une butée angulaire, constituée par exemple d'une protubérance recourbée fixée sur l'EOP au droit du clapet d'entraînement, du côté de l'axe opposé à celui où se trouve l'orifice, permettant à l'EOP d'être entraîné par le clapet d'entraînement lorsque celui-ci a atteint un écart angulaire prédéterminé (φ) par rapport à l'EOP.

Afin que le dispositif de l'invention puisse être commandé et assurer le débit souhaité, il est nécessaire que le clapet d'entraînement soit relié à des moyens de transmission permettant de provoquer son déplacement à partir de l'extérieur de la canalisation. Pour rappel, si plusieurs clapets sont présents, tous sont solidaires et se déplacent donc ensemble. Une solution simple consiste à ce que le ou les clapets soient fixés à l'axe, et à ce qu'au moins l'une des extrémités de l'axe traverse la paroi de la canalisation, de manière à ce qu'on puisse lui imposer une rotation. Il est souhaitable, dans ce cas, d'utiliser un ou plusieurs joints appropriés afin de réduire au minimum - et si possible d'éviter - toute fuite entre l'intérieur et l'extérieur de la canalisation, ainsi qu'entre l'amont et l'aval de la canalisation Les moyens de transmission peuvent alors être reliés à un actionneur approprié. Dans le contexte des moteurs, on parlera de "boîtier papillon mécanique" lorsque le dispositif est relié à un levier ou à une pédale actionnés par l'utilisateur, par l'intermédiaire de moyens de transmission tels qu'un câble ou une tringle, et on parlera de "boîtier papillon motorisé" lorsque le dispositif est relié à un actionneur électrique, pneumatique ou hydraulique, cet actionneur étant généralement commandé par un calculateur prenant en compte différents paramètres liés au fonctionnement du moteur ainsi que bien entendu une commande fournie par l'utilisateur.

Dans certains cas particuliers, notamment lorsque le dispositif de l'invention est destiné à être utilisé dans un boîtier papillon destiné au réglage du débit d'air alimentant le moteur à combustion interne d'un véhicule, il est avantageux que des moyens de rappel maintiennent le clapet d'obturation écarté de l'élément d'obturation principal en l'absence de sollicitation externe. Ceci a comme avantage qu'en cas de défaillance éventuelle des moyens mécaniques (actionneurs) commandant l'ouverture du dispositif, le clapet d'obturation reste ouvert, fournissant au moteur une quantité d'air faible mais supérieure au débit correspondant à un fonctionnement au ralenti, ce qui permet par exemple de conduire le véhicule à un garage (fonction dite de "limp-home"). Ces moyens de rappel peuvent par exemple consister en un ou plusieurs ressorts. Ils peuvent relier le clapet d'obturation à l'EOP de manière directe ou indirecte (en reliant par exemple l'EOP à l'axe si le clapet lui est fixé).

La bonne adaptabilité du dispositif de l'invention permet aisément de fixer le débit de "limp-home" à une valeur tenant compte des particularités du véhicule (présence ou non d'une climatisation, d'une boîte de transmission automatique, etc.), et ainsi d'obtenir une vitesse de limp-home adéquate malgré une éventuelle charge supplémentaire du moteur.

Selon une variante avantageuse, le dispositif de l'invention est réalisé en matière plastique, du moins en ce qui concerne ses pièces principales que constituent l'élément d'obturation principal, le tronçon de canalisation dans lequel cet élément est installé, et le ou les clapets. Ces différentes pièces peuvent éventuellement être constituées de matières plastiques différentes. L'axe, quant à lui, peut éventuellement être métallique. Un avantage du dispositif de l'invention est que sa caractéristique de débit est relativement peu sensible à sa dilatation, ce qui permet précisément l'utilisation de matières plastiques. Par matière plastique, on entend désigner tout polymère ou mélange de polymères, contenant éventuellement un ou plusieurs additifs (antioxydants, stabilisants, pigments, etc.) ainsi qu'éventuellement une ou plusieurs matières de charge (carbonate de calcium, fibres de verre, etc.). La matière plastique utilisée ne doit pas forcément être un "polymère technique" présentant des propriétés mécaniques élevées, tel que par exemple un polysulfure de phénylène, un polyarylamide ou un polyétherimide ; au contraire, on peut avantageusement utiliser des matières plastiques "courantes" telles que les polyamides. On préfère utiliser un polyamide 6 ou 6,6 chargé de charges minérales.

Comme exposé initialement, le dispositif de l'invention est avantageusement utilisé en association avec un moteur à combustion interne. On l'utilise typiquement en tant que "boîtier papillon" situé sur la canalisation d'alimentation en air du moteur, en général entre un filtre à air et un répartiteur d'admission distribuant l'air aux différents cylindres. Dans la plupart des véhicules, l'ouverture du dispositif, et donc le débit d'air, sont commandés par une pédale d'accélération, soit directement (cf. "boîtier papillon mécanique"), soit indirectement (cf. "boîtier papillon motorisé"). A cette fin, l'invention concerne également un boîtier papillon pour moteur à combustion interne, comprenant un dispositif d'obturation tel que décrit ci-dessus. Elle concerne encore un moteur à combustion interne, auquel est associé un tel boîtier papillon ; en particulier, un moteur à essence.

Dans le cas d'un boîtier papillon mécanique, il est généralement utile de prévoir un bypass ajustable, dit "de ralenti", destiné à fournir au moteur une quantité d'air permettant d'éviter son arrêt même lorsque le dispositif d'obturation proprement dit est complètement fermé. Ce bypass peut être matérialisé par un conduit reliant deux points de la canalisation situés en amont et en aval dudit dispositif, ce conduit étant de préférence muni de moyens permettant de régler le débit de ralenti le traversant.

Dans le cas d'un boîtier papillon motorisé, l'un des avantages du dispositif de l'invention est qu'il permet de se passer d'un tel bypass externe. En effet, une fonction de bypass peut être obtenue très simplement, dans le dispositif de l'invention, en imposant au clapet d'obturation une certaine ouverture minimale, adaptée en permanence et automatiquement aux conditions de fonctionnement du moteur (charge, température, etc.) en vue d'assurer une vitesse de rotation minimale prédéterminée.

Le dispositif de l'invention peut également être utilisé dans toute autre application nécessitant le contrôle précis du débit d'un fluide, qu'il s'agisse d'un gaz ou d'un liquide.

### DESCRIPTION DES DESSINS

Les figures annexées illustrent, de façon non limitative, différentes variantes de réalisation du dispositif de l'invention.

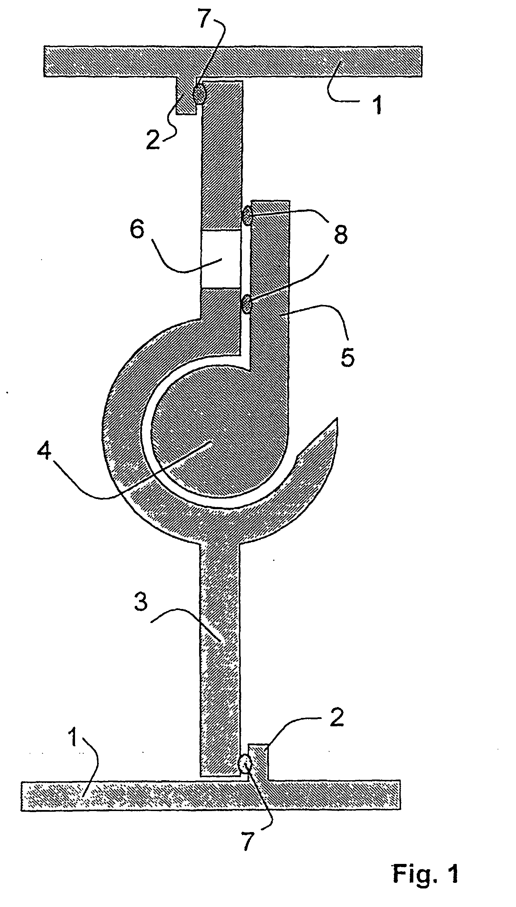

La figure 1 représente en coupe un dispositif d'obturation conforme à l'invention. L'axe de la canalisation est parallèle au plan de la figure, qui est perpendiculaire à l'axe de rotation. On distingue sur cette figure les parois de la canalisation (1), munies d'épaulements (2), présentant approximativement la forme de demi-cercles, destinés à améliorer l'étanchéité en position fermée. L'élément obturateur principal (3) est représenté en position fermée ; il est muni d'un orifice (6) le traversant, ainsi que d'un logement cylindrique creux, diamétral, recevant l'axe de rotation (4). Ce dernier est muni d'un clapet (5), jouant à la fois le rôle d'un clapet d'obturation et d'entraînement, représenté ici en position fermée. La périphérie de l'EOP (3) est munie de deux joints d'étanchéité (7) en forme de demi-cercles, destinés à coopérer avec les épaulements (2), et le clapet (5) est muni d'un joint d'étanchéité toroïdal (8).

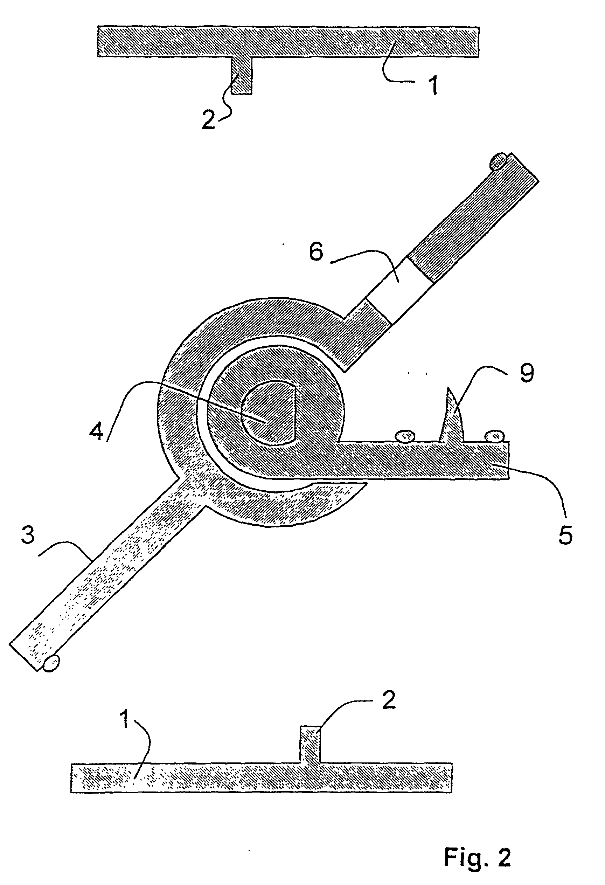

La figure 2 représente un dispositif semblable en position ouverte : le clapet (3) est à son ouverture maximale, et a provoqué l'ouverture partielle de l'EOP (3). Une différence que présente le dispositif de la figure 2 par rapport à celui de la figure 1 est que son clapet (5) est muni d'une protubérance (9), approximativement perpendiculaire à la partie plane du clapet (5), et profilée de manière à pouvoir s'engager dans l'orifice (6) de façon à améliorer la progressivité du débit du fluide par l'orifice (6) dans la plage des très faibles débits. On a en outre représenté sur la fig. 2 un axe (4) muni d'un méplat servant à la fixation angulaire du clapet sur l'axe.

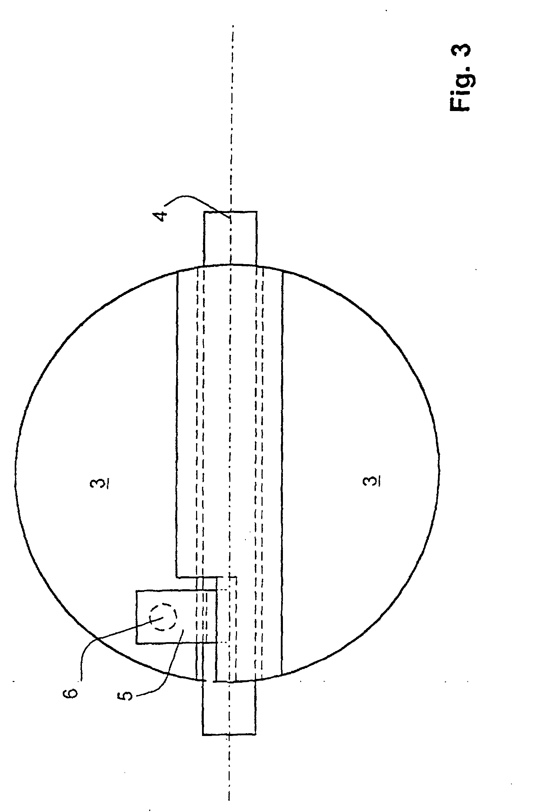

La figure 3 représente le même dispositif en élévation. Dans un souci de simplicité, la paroi de la canalisation n'a pas été représentée. On comprendra qu'au moins une extrémité de l'axe (4) traverse la paroi de la canalisation, afin qu'on puisse le relier à un actionneur approprié en vue d'imposer au clapet - et indirectement à l'EOP - la position voulue.

## Revendications

1. Dispositif d'obturation destiné au réglage progressif du débit d'un fluide circulant dans une canalisation (1), comprenant
(a) un élément d'obturation principal (3) pouvant pivoter indépendamment autour d'un axe (4) traversant la canalisation et obturer celle-ci, ainsi que
(b) au moins un clapet d'entraînement (5), pouvant pivoter autour de l'axe (4) et coopérer mécaniquement avec l'élément d'obturation principal (3) de manière à provoquer sa rotation autour de l'axe (4);
l'élément d'obturation principal (3) comprenant un logement cylindrique creux, situé substantiellement dans son plan, dans lequel passe l'axe (4) et qui le partage en deux parties situées respectivement de part et d'autre de l'axe (4);
l'élément d'obturation principal (3) étant en outre traversé par un seul orifice (6) situé dans une seule et même partie de l'élément d'obturation principal (3), d'un seul et même côté de l'axe (4), ledit orifice pouvant être obturé par le clapet d'entraînement, lequel clapet permet de régler le débit du fluide à travers l'orifice ;
l'élément d'obturation principal (3) ne commençant à pivoter autour de l'axe (4), à partir d'une position fermée initiale, que lorsque le clapet d'entraînement (5) présente un écart angulaire prédéterminé φ, non-nul, par rapport audit élément, ce qui permet au fluide de s'écouler exclusivement par l'orifice (6) avant que l'élément d'obturation principal (3) ne commence à s'ouvrir, l'élément d'obturation principal et le clapet d'entraînement étant substantiellement plans.

2. Dispositif d'obturation selon la revendication 1, dans lequel la canalisation (1) est de section circulaire et l'élément d'obturation principal (3) a la forme d'un disque.

3. Dispositif d'obturation selon l'une des revendications précédentes, dans lequel l'élément d'obturation principal est muni de moyens de rappel, faisant en sorte qu'en l'absence de sollicitation, cet élément se ferme et obture la canalisation.

4. Dispositif d'obturation selon l'une des revendications précédentes, dans lequel au moins un clapet d'entraînement comporte une protubérance (9) globalement perpendiculaire au clapet, dirigée vers l'orifice (6) et apte à s'engager dans celui-ci.

5. Dispositif d'obturation selon l'une des revendications précédentes, dans lequel l'élément d'obturation principal (3) comporte un logement cylindrique creux, transversal, destiné à recevoir l'axe (4), lequel logement comprend, à au moins l'une de ses extrémités, une ouverture en forme de fente, parallèle à l'axe, dans laquelle passe le clapet d'entraînement (5), ladite ouverture interceptant, dans un plan perpendiculaire à l'axe, un angle permettant audit clapet de pivoter au maximum d'un angle φ par rapport à l'élément d'obturation principal (3).

6. Dispositif d'obturation selon la revendication précédente, dans lequel le logement cylindrique creux comporte une ouverture en forme de fente à chacune de ses deux extrémités, et un clapet d'entraînement passe à travers chacune des deux ouvertures.

7. Dispositif d'obturation selon l'une des revendications précédentes, dans lequel des moyens de rappel maintiennent le clapet d'entraînement écarté de l'élément d'obturation principal en l'absence de sollicitation externe.

8. Boîtier papillon pour moteur à combustion interne, comprenant un dispositif d'obturation selon l'une des revendications précédentes.

## Patentansprüche

1. Drosselvorrichtung, welche dazu bestimmt ist, den Fluß eines in einem Röhrensystem (1) zirkulierenden Fluids zu regeln und die folgendes aufweist:
(a) ein Hauptdrosselelement (3), welches unabhängig um eine das Röhrensystem durchquerende Achse (4) drehbar ist und dieses Röhrensystem schließen kann, und
(b) mindestens eine Mitnehmerklappe (5), die um die Achse (4) drehbar ist und mechanisch mit dem Hauptdrosselelement (3) zusammenwirken kann, so daß dessen Drehung um die Achse (4) hervorgerufen wird , wobei das Hauptdrosselelement (3) ein hohles zylindrisches Lager aufweist, das im wesentlichen in der Ebene des Elements liegt, durch welches Lager die Achse (4) verläuft und das das Element in zwei jeweils auf beiden Seiten der Achse (4) gelegene Teile trennt; und wobei das Hauptdrosselelement (3) außerdem von einer einzigen, in einem einzigen gleichen Teil des Hauptdrosselelements auf einer einzigen und gleichen Seite der Achse (4) gelegenen Öffnung (6) durchquert wird, wobei die besagte Öffnung von der Mitnehmerklappe verschlossen werden kann und die besagte Klappe es erlaubt, den Fluidfluß durch die Öffnung zu regeln ; und wobei das Hauptdrosselelement (3) sich erst ab einer anfänglichen geschlossenen Stellung um die Achse (4) zu drehen beginnt, wenn die Mitnehmerklappe (5) einen vorgestimmten Winkelabstand Φ ungleich Null in Bezug auf das besagte Element aufweist , wodurch es ermöglicht wird, daß das Fluid ausschließlich durch die Öffnung (6) fließt, bevor sich das Hauptdrosselelement (3) zu öffnen beginnt, wobei das Hauptdrosselelement und die Mitnehmerklappe im wesentlichen eben sind.

2. Drosselvorrichtung nach Anspruch 1, bei der das besagte Röhrensystem (1) einen kreisförmigen Querschnitt aufweist und das Hauptdrosselelement (3) scheibenförmig ist.

3. Drosselvorrichtung nach einem der vorangehenden Ansprüche, bei der das Hauptdrosselelement mit Rückholmitteln versehen ist, wodurch erreicht wird, daß dieses Element das Röhrensystem in Abwesenheit von Belastung schließt und öffnet.

4. Drosselvorrichtung nach einem der vorangehenden Ansprüche, bei der mindestens eine Mitnehmerklappe eine Protuberanz (9) aufweist, die global rechtwinklig zur Klappe in Richtung der Öffnung (6) verläuft und fähig ist, in diese eingeführt zu werden.

5. Drosselvorrichtung nach einem der vorangehenden Ansprüche, bei der das Hauptdrosselelement (3) ein transversales hohles zylindrisches Lager aufweist, das dazu bestimmt ist, die Achse (4) aufzunehmen, wobei das Lager an mindestens einem seiner Enden eine parallel zur Achse verlaufende schlitzförmige Öffnung aufweist, in die die Mitnehmerklappe (5) eindringt, wobei die besagte Öffnung in einer rechtwinklig zur Achse verlaufenden Ebene einen Winkel absperrt, der es der Klappe erlaubt, um maximal einen Winkel Φ in Bezug auf das Hauptdrosselelement (3) zu verschwenken.

6. Drosselvorrichtung nach einem der vorangehenden Ansprüche, bei der das hohle zylindrische Lager an jeder seiner Enden eine schlitzförmige Öffnung aufweist und bei der eine Mitnehmerklappe in jede der beiden Öffnungen eindringt.

7. Drosselvorrichtung nach einem der vorangehenden Ansprüche, bei der Rückholmittel die Mitnehmerklappe in Abwesenheit einer externen Belastung von dem Hauptdrosselelement entfernt halten.

8. Drosselgehäuse für einen Brennstoffmotor, die eine Drosselvorrichtung nach einem der vorangehenden Ansprüche aufweist.

## Claims

1. A shut-off device for progressive regulation of the flow rate of a fluid flowing in a pipe (1) , said shut-off device comprising:
(a) a main shut-off member (3) independently pivotable about a spindle (4) passing through the pipe in order to close the pipe; and
(b) at least one drive flap (5) able to pivot about the spindle (4) and to act mechanically on said main shut-off member (3) in such a way as to turn said member about the spindle (4),
wherein said main shut-off member (3) includes a transverse hollow cylindrical housing, in which the spindle (4) passes, situated basically in the plane of the said shut-off member,
wherein the said transverse hollow cylindrical housing separates the said shut-off member into two portions respectively on both sides of the spindle (4); wherein said main shut-off member (3) also is traversed by at least one orifice (6) that is situated in the single same portion of the main shut-off member (3) and on one same side of the spindle (4) and wherein the said orifice can be closed by at least one drive flap which can regulate the rate of flow of the fluid through the orifice; and wherein the main shut-off member (3) begins to pivot about the spindle (4), from an initial closed position, when the drive flap (5) is at a predetermined non-zero angular distance Φ from said member, thus allowing the fluid to flow only through the orifice (6) until said main shut-off member (3) begins to open, wherein the main shut-off member and the drive flap are basically planar .

2. The shut-off device according to claim 1, in which the pipe (1) is of circular section and the main shut-off member (3) is in the form of a disc.

3. The shut-off device according to one of the previous claims, in which the main shut-off member has return means in order that, in the absence of any stress, this member shuts and closes off the pipe.

4. The shut-off device according to one of the previous claims, in which at least one drive flap has a proturbance (9) that is essentially perpendicular to the flap, is directed towards the orifice (6) and is able to engage the latter.

5. The shut-off device according to one of the previous claims, in which said main shut-off member (3) includes a transverse hollow cylindrical housing for the spindle (4), said housing having at least on one end an opening in the form of a slot which is parallel to the spindle and through which the drive flap (5) passes, the opening intercepting, in a plane perpendicular to the spindle, an angle allowing the said flap to pivot through a maximum angle Φ slashed relative to said main shut-off member (3).

6. The shut-off device according to one of the previous claims, in which the hollow cylindrical housing has an opening in the form of a slot at each of its two ends, and a drive flap passes through each of the two openings .

7. The shut-off device according to one of the previous claims , in which return means keep the shut-off flap separated from the main shut-off member in the absence of an external load .

8. Throttle housing for an internal combustion engine comprising a shut-off device according to one of the previous claims.
